# EUROPEAN PATENT SPECIFICATION

(11) **EP 0 792 418 B1**
(45) Date of publication and mention of the grant of the patent: **24.04.2002**
(21) Application number: 95904700.2
(22) Date of filing: 16.12.1994
(51) Int. Cl.: F16B 2/14, F16L 3/24

(54) **FIXING CLAMP**
BEFESTIGUNGSKLEMME
BRIDE DE FIXATION

(30) Priority: 21.12.1993 DE 4343676
(43) Date of publication of application: 03.09.1997
(73) Proprietor: KVERNELAND KLEPP AS, N-4344 Kvernaland (NO)
(72) Inventor: SKJAEVELAND, Magne, N-4062 Klepp St. (NO)
(74) Representative: König, Reimar, Dr.-Ing.
(86) International application number: NO9400207
(87) International publication number: WO9517610

(56) References cited:
- SE-B- 403 176
- SE-B- 419 788
- US-A- 1 737 989
- US-A- 3 998 563

## Description

The invention relates to a clamp for fixing a profile according to the preamble of claim.

Clamps are often used for adjustable attachment of objects to pipes and other profiles. Simple clamp units normally engage only a part of the pipe or profile, and the strength of an optimal clamp connection is not achieved. More enhanced clamps tend to be more complex, often consisting of two or more parts and a number of bolts and nuts.

The Swedish documents 403 176 and 419 788 both describe a clamp of the above-mentionned type consisting of a three legs setting and a conical, loosely attached bolt extending through two simple holes. By bearing the bolt against the object it is tightened to the setting and the grooves of the thread mesh with the holes. Due to the loosen attachment of the bolt, this clamp is disadvantageous for adjusting and establishing especially long objects or pipes. Besides, it requires a specific bolt which is expensive to manufacture.

The US patent 1,737,989 describes a preferably U-shape pipe support comprising a metallic band, a transverse bolt and a locking nut. The bolt consists of a thread and an oblique side which bears against the pipe. Especially for rectangular pipes and profiles this construction exhibits the disadvantage of engaging only a part of the object. Thus an optimal and stable connection is not provided.

The purpose of the invention is to eliminate these disadvantages and bring a simple and effective clamp which is characterised by the features of the second part of claim 1.

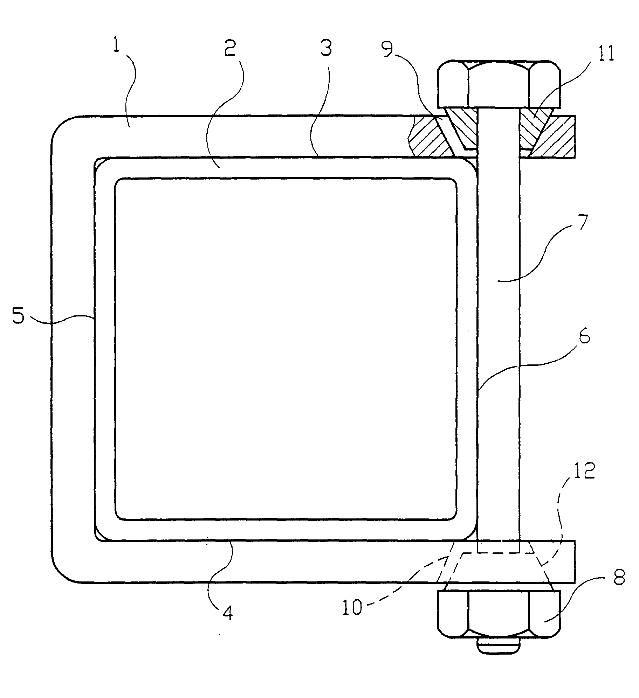

The invention will be described in the following through an example of embodiment, with reference to the accompanying drawing.

A clamp body 1 engages a square pipe 2 on three sides, top side 3, bottom side 4 and back side 5, while the front side 6 is engaged by a bolt 7 which is secured by a nut and extend through conical holes 9, 10 in the top and bottom parts of the clamp body 1 and through conical washers 11, 12. The holes 9, 10 have a common centre line which is parallel to the front side 6. The distance between said centre line and the front line 6 is less than the bolt 7 radius, while the minimum diameter of holes 9, 10 exceeds the diameter 7, which makes it possible to install the bolt.7. The conical washers 11, 12 on the bolt 7 engage the conical holes 9, 10 on the far side from the far side from the pipe 2, meaning that the bolt 7 is located eccentrically in the holes 9, 10. Tightening the bolt 7 males the clamp body squeeze the top side 3 and the bottom side 4 of the pipe. The conical washers 11, 12 in the conical holes 9, 10 force the bolt 7 in the direction, meaning that the bolt 7 in the direction of the back side 5 of the pipe 2. Thus the pipe 2 is squeezed from all sides, giving a strong and stable clamp connection.

The clamp body 1 may have support members for objects to be attached to the pipe 2, and it may have any number of bolts.

## Claims

1. A clamp fixing a profile such as a rectangular or square profile or pipe (2) consisting of a clamp body (1) with legs engaging the pipe or profile (2) on its top side (3), bottom side (4) and back side (5), and a bolt (7) extending through holes in the legs **characterized in** the bolt (7) being surrounded by conical washers (11, 12) and the holes having inclined surfaces (9, 10) corresponding to the conical washers (11, 12) and forcing the bolt (7) towards the pipe or profile (2).

## Patentansprüche

1. Klammer zum Befestigen eines Profils wie ein rechteckiges oder quadratisches Profil oder Rohr (2) aus einem Klammerkorpus (1) mit das Rohr oder Profil an dessen Oberseite (3), Bodenseite (4) und dessen Rückseite (5) erfassenden Schenkeln, einem sich durch Öffnungen in den Schenkeln erstreckenden Bolzen (7), **dadurch gekennzeichnet, daß** der Bolzen (7) von konischen Ringen (11, 12) umgeben ist und die Öffnungen geneigte Oberflächen (9, 10) besitzen, die den konischen Ringen (11, 12) entsprechen und den Bolzen (7) gegen das Rohr oder Profil zwingen.

## Revendications

1. Une bride pour fixer un profilé tel qu'un profilé ou un tuyau (2) rectangulaire ou carré, composé d'un corps de bride (1) avec des jambes venant en prise sur le tube ou profilé (2) au niveau de son côté supérieur (3), de son côté inférieur (4) et de son côté arrière (5), et d'un boulon (7) s'étendant à travers des perforations dans les jambes, **caractérisé en ce que** le boulon (7) est entouré de rondelles coniques (11, 12) et **en ce que** les perforations ont des surfaces inclinées (9, 10) correspondant aux rondelles coniques (11, 12) et forçant le boulon (7) vers le tube ou profilé (2).
